# EUROPÄISCHE PATENTSCHRIFT

(11) **EP 2 565 816 B1**
(45) Veröffentlichungstag und Bekanntmachung des Hinweises auf die Patenterteilung: **06.07.2022**
(21) Anmeldenummer: 12176646.3
(22) Anmeldetag: 17.07.2012
(51) Int. Cl.: G06K 1/12

(54) **Verfahren und Vorrichtung zur Erzeugung eines Barcodes auf einem Substrat**
Method and apparatus for generating a barcode on a substrate
Procédé et dispositif de production d'un code-barre sur un substrat

(30) Priorität: 01.09.2011 DE 102011112232
(43) Veröffentlichungstag der Anmeldung: 06.03.2013
(73) Patentinhaber: Heidelberger Druckmaschinen AG, 69115 Heidelberg (DE)
(72) Erfinder: Gnutzmann, Frank, 24214 Gettorf (DE); Weinholz, Peter, 24214 Blickstedt (DE)

(56) Entgegenhaltungen:
- EP-A2- 1 480 160
- US-A1- 2007 168 251
- US-A1- 2010 147 960

## Beschreibung

Die vorliegende Erfindung betrifft ein Verfahren zur Bebilderung eines Substrates, wobei ein Bild auf der Oberfläche des Substrats erzeugt wird und die Bebilderung wenigstens einen Bildbereich erzeugt, welcher einen Barcode enthält. Des Weiteren betrifft die Erfindung einen Datenträger zur Speicherung eines Computerprogramms, welches zur Durchführung dieses Verfahrens verwendet wird. Weiter betrifft die Erfindung eine Vorrichtung zur Bebilderung eines Substrates mit einem Bild, wobei das Bild wenigstens einen Bildbereich aufweist, welcher einen Barcode enthält, umfassend eine Bebilderungseinrichtung für Druckplatten und / oder eine Druckmaschine und wenigstens einen ersten Computer zur Erzeugung eines Barcodes zur Durchführung des beschriebenen Verfahrens. Die Bebilderungseinrichtung von Druckplatten und die Druckmaschinen sollen dabei jeweils zur Bebilderung des Substrates verwendet werden.

Zur Kennzeichnung von Druckprodukten werden heutzutage sogenannte Barcodes verwendet. Bei diesen Barcodes kann man unterscheiden zwischen eindimensionalen, zweidimensionalen und dreidimensionalen Barcodes. Für bestimmte Anwendungen sind bereits auch schon vierdimensionale Barcodes vorgeschlagen worden.

Bei eindimensionalen Barcodes handelt es sich im Allgemeinen um Streifenmuster, die in einer Dimension, d. h. einer Richtung, auf einem Produkt aufgebracht werden und dort bestimmte Informationen codieren.

Ein 2D-Barcode hat eine Ausdehnung in zwei Dimensionen und wird häufig in Schwarz-Weiß in der Art einer bestimmten Pixel-Anordnung in einem bestimmten Bereich auf ein Substrat aufgebracht und codiert hier entsprechende Informationen. Durch die Verwendung der zweiten Dimension kann ein 2D-Barcode im Wesentlichen eine größere Anzahl von Informationen codieren.

Ein 3D-Barcode entspricht im Wesentlichen einem 2D-Barcode, wobei außer den Farben Schwarz und Weiß noch weitere farbige Elemente zur Erhöhung der möglichen Informationsdichte verwendet werden.

Bei einem 4D-Barcode wird als zusätzlicher Informationsträger die Änderung der Pixel-Anordnung in dem entsprechenden Bereich in der Zeit verwendet.

Ausgelesen werden die codierten Informationen der jeweiligen Barcodes mittels eines Scanners, welcher durch Auslesen eines Reflexionsmusters nach einem Algorithmus, welcher dem Barcode zugeordnet sein muss die Informationen decodiert, so dass sie einem Nutzer des Scanners angezeigt werden können oder anderweitig verwendet werden.

Zur Erzeugung des Barcodes auf dem Substrat wird normalerweise ein Barcode-Erzeugungsprogramm verwendet, welches innerhalb einer Druckvorlage in einem vorgegebenen Bereich aus zu codierenden Informationen entsprechend die graphischen Elemente des Barcodes erzeugt.

Der so erzeugte Barcode in seiner graphischen Form kann dann in einem Druckverfahren, wie z. B. einem Digitaldruckverfahren, direkt auf einen Bedruckstoff oder auf ein anderes Druckprodukt aufgetragen werden. Hierbei kann es sich beispielsweise um einen EAN-8-Code handeln, welcher auf einer Verpackung eines Produktes angebracht wird, um Informationen über das verpackte Produkt bereitzustellen. Dieser EAN-8-Code kann dann an einer Kasse eines Supermarktes ausgelesen werden, wodurch das Produkt, welches verpackt ist, eindeutig identifiziert wird.

Ein Barcode kann auch innerhalb des Workflows zur Erzeugung eines Druckproduktes oder eines anderen Produktes verwendet werden, um Zwischenstufen des Enderzeugnisses mittels des Barcodes so zu kennzeichnen, dass die bereits durchgeführten Bearbeitungsschritte und / oder die noch durchzuführenden Bearbeitungsschritte auf dem Teilprodukt selber mittels des Barcodes hinterlegt werden.

Für ein Druckverfahren, welches als Zwischenschritt die Bebilderung von Druckplatten als Substrate beinhaltet, kann so beispielsweise in einem Bereich der Druckplatte, welcher nicht zur Erzeugung des Druckbildes vorgesehen ist, ein Bildbereich vorgesehen sein, in welchem ein Barcode bebildert wird, welcher die Druckplatte eindeutig identifiziert. Dieses kann z. B. dann sinnvoll sein, wenn alleine optisch der Farbauszug oder der Druckjob, zu dem die Druckplatte gehört, nicht eindeutig identifizierbar ist. Diese Information kann dann durch den codierten Text des Barcodes bereitgestellt werden.

Für die Erzeugung des Barcodes mittels des Barcode-Erzeugungsprogramms ist es notwendig, dem Programm alle Informationen zur Verfügung zu stellen, welche zur Erzeugung des Barcodes notwendig sind. Hierzu zählen z. B. die Art des Barcodes, als auch die Größe des Barcodes, die Größe der einzelnen Module, die Strichstärken und weitere Variablen, welche die Ausprägung des Barcodes beeinflussen.

Für die Erzeugung eines Barcodes ist also notwendig, all diese Informationen in das Programm einzutragen. Wird der Barcode nochmals geändert, so sind auch nochmals erneut alle Eingaben notwendig. Sind z. B. auf einer Pizzapackung sechs Barcodes, so müssen Änderungen jeweils durch sechsfache Neuerzeugung der einzelnen Barcodes realisiert werden. Dieses bedeutet einen erheblichen Aufwand und eine Störung des gesamten Produktionsprozesses.

Die Offenlegungsschrift US 2010/0147960 A1 offenbart ein Verfahren zur Vorbereitung eines Dokuments mit einem Barcode für den Druckvorgang. Dabei enthält das Dokument einen Platzhalter in Form eines Trigger Fonts, welcher beim Druckvorgang in den tatsächlichen Barcode umgewandelt wird. Der Trigger Font besteht dabei aus TrueType, PostScript oder ähnlichen Typen, welche erst bei der Umwandlung des zu druckenden Dokuments in einen Barcode zur Ausgabe durch den Drucker umgewandelt werden. Auf diese Art und Weise wird vermieden, dass in dem zu druckenden Dokument bereits eine grafische Abbildung des zu druckenden Barcodes zuvor erzeugt werden muss. Die grafische Abbildung des Barcodes wird dabei erst beim eigentlichen Druckvorgang erzeugt.

Aus der Offenlegungsschrift US 2007/00168251 A1 geht ein System zur Herstellung und Verwaltung von Coupons oder Gutscheinen zu Werbezwecken hervor. Dabei werden Gutscheinvorlagen verwendet, welche bestimmte vorproduzierte Inhalte aufweisen. Aus diesen Gutscheinvorlagen werden dann in Abhängigkeit des gewünschten Werbezwecks tatsächliche Gutscheine hergestellt und zur Produktion an einen Drucker weitergeleitet.

Die europäische Patentanmeldung EP 1 480 160 A2 zeigt ein Drucksystem für einen ein- oder zweidimensionalen Barcode, wobei sogenannte virtuelle Fonts für einen eindimensionalen oder zweidimensionalen Barcode erzeugt werden. Diese virtuellen Fonts können leicht verändert werden, so dass der später zu druckende Inhalt der ein- oder zweidimensionalen Barcodes leicht verändert werden kann. Das Drucksystem weist außerdem einen Rechner mit einem Anwendungsprogramm auf, welches aus den virtuellen Fonts einen ein- oder zweidimensionalen Barcode herstellt sowie einen Druckertreiber umfasst, welcher Text in Druckbefehle umsetzt. Die virtuellen Fonts sind dabei mit entsprechenden Barcode-Daten verbunden, so dass bei der Aufbereitung des Dokuments für den Druck in Abhängigkeit der verwendeten virtuellen Fonts die passenden Barcode-Elemente hergestellt und gedruckt werden.

Aus der US 2005/0012949 A1 ist es bekannt, zur Ermöglichung einer größeren Flexibilität aus den einzelnen möglichen Parameterkombinationen des Barcodes einen virtuellen Font zu erzeugen, so dass der Barcode selber nur noch durch die Darstellung der wiederzugebenden Informationen mittels dieses Fonts erzeugt wird.

Der Barcode selber wird dann mittels dieser Fonts an den Drucker übergeben, welchem diese virtuellen Fonts wenigstens über den zur Verfügung gestellten Druckertreiber bekannt sein müssen.

Eine mögliche Anpassung des Barcodes oder auch nur einzelner Parameter des Barcodes während unterschiedlicher Bearbeitungsstufen der Druckvorlage innerhalb eines Workflows zur Erzeugung eines Druckbildes bzw. eines Bildes auf einem Substrat, wie z. B. einer Druckplatte oder einem Bedruckstoff, ist mittels der bekannten Erzeugungsverfahren für Bedruckstoffe nicht einfach zu realisieren. Auch hier müsste der Barcode jeweils neu mit allen Parametern, die den Font definieren, erzeugt werden.

Die Aufgabe der vorliegenden Erfindung besteht nun darin, die bestehenden und beschriebenen Probleme des Standes der Technik wenigstens zu verringern.

Die Aufgabe der vorliegenden Erfindung wird durch ein Verfahren nach dem Oberbegriff von Anspruch 1 gelöst, bei welchem auf der Oberfläche eines Substrates ein Bild auf diesem Substrat erzeugt wird und dieses Bild wenigstens einen Bildbereich aufweist, welcher einen Barcode enthält.

Bei dem Substrat kann es sich beispielsweise um einen beliebigen Bedruckstoff, wie eine Rolle Papier, Papierbogen, d. h. Druckbogen, hier insbesondere auch um dickere Bogen, wie z. B. aus Pappe oder anderem Verpackungsmaterial oder auch um Folienbedruckstoff, handeln. Bei dem Substrat kann es sich weiterhin auch um Zwischenprodukte eines Druckverfahrens, wie z. B. um Druckplatten handeln.

Zur Durchführung der Bebilderung und zur Erzeugung des Bildes auf der Oberfläche des Substrates ist es erfindungsgemäß vorgesehen, dass mit einem ersten Computer eine Datei erzeugt wird, die eine elektronische Vorlage zur Bebilderung des Substrats umfasst.

Die elektronische Vorlage kann dabei einfarbig ausgeführt sein, so dass sie den einzelnen Farbauszügen entspricht, die für das fertige Druckprodukt vorgesehen sind, oder auch die Überlagerung aller Farbauszüge darstellen. Die Vorlage kann dabei Bereiche aufweisen, die nicht auf einem fertigen Druckprodukt auftauchen. Diese Bereiche können am Randbereich der Vorlage so ausgestaltet sein, dass sie entweder nach einem Bebilderungsvorgang eines Bedruckstoffes abgeschnitten werden, oder auf einer Druckplatte so bereitgestellt werden, dass dieser Bereich nicht auf einen Bedruckstoff bei einem anschließenden Druckverfahren übertragen wird.

Der Bildbereich, in welchem der Barcode erzeugt wird, kann aber auch je nach Anwendungsfall innerhalb des Bildes liegen, welches auf dem abschließenden Druckprodukt sichtbar ist.

Die Datei wird in einer Seitenbeschreibungssprache (PDL) erzeugt. Eine mögliche Seitenbeschreibungsssprache, die heutzutage bei der Erzeugung von Druckprodukten üblich ist, ist beispielsweise PDF. In diesem Format soll die Datei bevorzugt erzeugt werden, aber auch andere Seitenbeschreibungssprachen sind durchaus möglich.

Innerhalb dieser Datei wird in einem ersten Bereich ein erster Abschnitt angelegt, wobei dieser Abschnitt die Daten enthält, welche einen ersten Barcode beschreiben. Insbesondere kann es hierbei vorgesehen sein, dass der Barcode in einer graphischen Darstellung beispielsweise in Form einer Bitmap oder als Text eines bestimmten Fonts hinterlegt wird.

Weiterhin ist es vorgesehen, dass innerhalb der Datei der gesamte erste Bereich mittels Identifizierungselementen eindeutig identifizierbar gemacht wird. Bei solchen Identifizierungselementen kann es sich in einer Weiterbildung der Erfindung beispielsweise um ein Form-X-Object handeln, welches den gesamten ersten Bereich umfasst bzw. beschreibt.

Nachdem die Datei mit dem ersten Bereich und dem ersten Abschnitt, welcher den ersten Barcode umfasst, erzeugt wurde, ist es weiterhin vorgesehen, dass diese Datei auf ein Speichermedium, hierbei kann es sich beispielsweise um eine Festplatte, einen Flashspeicher, eine CD oder eine DVD handeln, gespeichert wird, oder als ein Datenstrom, beispielsweise über ein Netzwerk oder das Internet, an einen zweiten Computer gesendet wird.

Diese gespeicherte oder gesendete Datei wird dann vom ersten oder von dem zweiten Computer geöffnet bzw. erneut geöffnet.

Mittels der vorgesehenen Identifizierungselemente wird der erste Bereich der Datei identifiziert. Insbesondere wird der erste Barcode dann unter Zuhilfenahme dieser Identifizierungselemente auf einem Monitor oder einem anderen Display dargestellt.

Auf diesen ersten Barcode wird zugegriffen und Änderungen an einzelnen Parametern und / oder an dem Inhalt des ersten Barcodes vorgenommen. Der Zugriff kann dabei beispielsweise über eine Auswahlmöglichkeit an einem Monitor oder einem anderen Display erfolgen. Hierfür wird der Barcode aus dem ersten Abschnitt decodiert und auf dem Display dargestellt. Auswahlmöglichkeiten sind hierbei zum Einen durch eine Touchbedienung des Displays oder durch einen Mauszeiger möglich, mittels dieser Elemente wird der Barcode ausgewählt. An dem so ausgewählten bzw. dem Zugriff zur Verfügung gestellten ersten Barcode können dann die Änderungen durchgeführt werden. Die Durchführung der Änderungen kann dabei insbesondere ausschließlich an einzelnen Parametern erfolgen, die in einem zweiten Abschnitt getrennt von dem Barcode selber, diesem aber zugeordnet, hinterlegt werden.

Mittels der so geänderten Parameter und / oder des Inhalts des Barcodes wird dann ein inhaltlich geänderter erster Bereich innerhalb der Datei erzeugt. Hierbei kann entweder der erste Bereich ergänzt oder geändert werden oder in einer bevorzugten Ausführungsform mittels der geänderten Parameter und / oder Inhalte neu erzeugt und neu in der Datei abgelegt werden.

Auf Grundlage dieser Datei mit dem geänderten ersten Bereich wird dann das Substrat bebildert. Die Bebilderung findet dabei in einer Bebilderungseinrichtung statt. Bei der Bebilderungseinrichtung handelt es sich je nach Substrat beispielsweise um einen Druckplattenbelichter, einen Inkjet-Drucker, einen elektrophotographischen Drucker oder um eine andere digitale Druckmaschine oder auch um eine Offset-Druckmaschine, in welcher ein Bedruckstoff, basierend auf einer Druckplatte, so bebildert wird, dass der Barcode über den Weg einer erzeugten Druckplatte als Bild auf einen Druckbogen aufgebracht wird.

Gemäß der Erfindung wird der Barcode dann auf dem Substrat unter Berücksichtigung der geänderten Parameter und / oder des geänderten Inhalts in dem wenigstens einen Bildbereich physisch erzeugt. Der Barcode kann dann gescannt und das Substrat auf Grundlage der ausgelesenen Daten, d. h. in Abhängigkeit von diesen Daten, beispielsweise weiteren Bearbeitungsschritten zugeführt werden.

In einer vorteilhaften Ausführungsform ist es vorgesehen, dass innerhalb des ersten Bereichs der Datei wenigstens ein zweiter Abschnitt angelegt wird. Innerhalb dieses zweiten Abschnitts werden dann Metainformationen zur Beschreibung des Barcodes abgelegt. Bei diesen Metainformationen kann es sich um Informationen handeln, welche den Barcode als solchen beschreiben. Hierzu zählen beispielsweise die Hintergrundfarbe, die Vordergrundfarbe, die Zeichendicke, die Modulhöhe, die Modulbreite, der Typ des Barcodes, die Position auf dem Bedruckstoff bzw. innerhalb des Layouts, eine mögliche Farbregel, die Vorsehung eines bestimmten oder auszuwählenden Rahmens, eine Abstandsmarkendefinition, d. h. welche Abstandsmarken können vorgesehen sein oder sind Abstandsmarken überhaupt vorgesehen, um welchen Zeichensatz handelt es sich, welche Zeichengrößen sind in einzelnen Bereichen des Barcodes vorgesehen, oder insgesamt welcher Textinhalt wird als solcher bereitgestellt. Durch die Bereitstellung dieser Metainformationen sollen dann alle Informationen innerhalb der Datei in der Seitenbeschreibungssprache so hinterlegt sein, dass in weiteren Verfahrensschritten, ggf. in weiteren Programmen oder auf weiteren Computern alle Informationen bereitgestellt sind, um den ersten Barcode zu öffnen und ihn ggf. nur in einzelnen Parametern oder ausschließlich im Inhalt an weitere Erfordernisse anzupassen. Hierbei ist nur vorgesehen, dass die Datei selber in der Seitenbeschreibungssprache hinterlegt ist, die Metainformationen können in einem privaten Bereich des zweiten Abschnitts in einem proprietären Dateiformat hinterlegt sein.

Auf Grundlage dieser Anpassungen wird dann ein inhaltlich geänderter erster Bereich in der Datei erzeugt und auf Grundlage dieser Datei das Substrat in einer Bebilderungseinrichtung bebildert, wobei der Barcode unter Berücksichtigung der Änderungen, d. h. der Parameteränderungen und / oder der Inhaltsänderungen in dem wenigstens einen Bebilderungsbereich physisch erzeugt wird.

In vorteilhaften Weiterbildungen des Verfahrens ist es vorgesehen, dass innerhalb des ersten Abschnitts der Barcode in einer graphischen Darstellung abgelegt wird und in einem zweiten Abschnitt die Metainformationen zur Beschreibung des Barcodes abgelegt werden. Wie beschrieben, können die Metainformationen herbei in proprietären Dateiformaten abgelegt werden, eine PDL-Codierung hier also nicht notwendig ist. Bei den Metainformationen innerhalb des Bereichs handelt es sich somit um einen sogenannten privaten Abschnitt der Datei, welcher nicht den besonderen Spezifikationen der PDL entsprechen muss.

Erfindungsgemäß soll das Verfahren einen möglichst einfach bearbeitbaren Barcode innerhalb eines Workflows realisieren. Dieses ist dadurch möglich, dass in einem ersten Schritt zunächst die Datei mit einem ersten Bereich erzeugt wird, sodann in einem zweiten Schritt die erzeugte Datei in einem zweiten Computer oder auch in einem ersten Computer erneut geöffnet wird, in einem dritten Schritt die Metadaten und / oder die graphischen Daten des ersten Abschnitts geändert oder ersetzt werden, wodurch insbesondere zweite Metadaten und / oder ein zweiter Barcode erzeugt wird, hierbei ist insbesondere vorgesehen, dass die zweiten Metadaten als Grundlage für die Erzeugung des zweiten Barcodes dienen und sodann der erste Bereich der Datei durch einen zweiten Bereich ersetzt wird, wobei der zweite Bereich den geänderten ersten Abschnitt mit dem geänderten zweiten Barcode umfasst und der zweite Bereich weiter den geänderten zweiten Abschnitt mit den geänderten Metadaten umfasst. Der zweite Abschnitt ist dabei abhängig von Eingaben des Nutzens und / oder von bereits durchgeführten oder auch durchzuführenden Arbeitsschritten an dem Substrat.

Die so gebildete geänderte Datei wird dann verwendet, um auf einem Substrat den zweiten Barcode zu bebildern.

Vorteilhafterweise soll das Verfahren ermöglichen, einen Barcode selber in der Weise einer dynamischen Marke zu verwenden. Hierfür ist es vorgesehen, dass ein dritter Abschnitt innerhalb des ersten Bereichs erzeugt. Bei diesem dritten Abschnitt kann es sich auch um einen Teilaspekt des zweiten Abschnitts handeln.

In diesem dritten Abschnitt werden weitere Daten, welche nicht direkt den Metainformationen entsprechen aber auf den Inhalt des zweiten Barcodes Einfluss nehmen, abgelegt. Bei diesen Daten soll es sich vorzugsweise um Daten in Form von Platzhaltern handeln. Hierfür kann insbesondere eine Tabelle in einem Speicherbereich eines Speichers hinterlegt sein, wobei die Tabelle mögliche dynamische Marken, d. h. mögliche Platzhalter aufweist.

Zur Erzeugung des zweiten Barcodes auf dem Substrat werden dann in einem weiteren Schritt der oder die Platzhalter durch vorgegebene Werte ersetzt. Handelt es sich bei dem Platzhalter beispielsweise um eine Marke $Color$, so kann vor der Erzeugung des zweiten Barcodes diese dynamische Marke durch den entsprechenden Wert des zu bebildernden Farbauszugs, z.B. Cyan, ersetzt werden. Auf der Grundlage der Daten des zweiten und dritten Abschnitts wird dann der zweite Barcode entweder zunächst im ersten Abschnitt oder direkt auf dem Substrat erzeugt. Bei den Platzhaltern kann es sich insbesondere um Werte, wie Farbe des Farbauszugs, ID des Druckauftrags, ID des Kunden, ID der Platte, Nummer der Platte oder auch Datum oder Uhrzeit handeln.

In einer bevorzugten Ausführungsform der Erfindung ist es vorgesehen, dass der erste Bereich in Form eines ersten form xObjects einer PDF-Datei erzeugt wird. Hierdurch können bekannte Elemente aus einer PDF-Datei zur Kennzeichnung des ersten Bereichs verwendet werden.

Dieses form xObject umfasst zunächst den Barcode in Form von graphischen Elementen innerhalb eines ersten Abschnittes und die Metainformationen in einem zweiten Abschnitt. Die Metainformationen müssen dabei nicht in Objekten hinterlegt sein, die sich aus der verwendeten Programmiersprache für das PDF oder allgemein einer PDL ergeben. Die wenigstens eine hinterlegte Metainformation soll aus der Menge Typ, Position, layoutspezifische Position, relative Positionsbestimmung, Modulhöhe, Modulbreite, Linienreduktion, Hintergrundfarbe, Vordergrundfarbe, Farbregel, Rahmen, Abstandsmarkendefinition, Zeichensatz, Zeichengröße und Textinhalt des Barcodes in dem zweiten Abschnitt bestehen. Es ist vorgesehen, dass bei der Verwendung von mehreren Metainformationen wenigstens eine dieser Metainformationen verwendet wird. Auf diese Weise können besondere oder notwendige Eigenschaften des Barcodes innerhalb des form xObjects mit der PDF-Datei gemeinsam von einem Speichermittel auf ein anderes, wie z. B. vom Arbeitsspeicher des ersten Computers auf einen Festplattenspeicher des ersten Computers oder von einem ersten Computer zu einem zweiten Computer transportiert werden. An dieser zweiten Stelle ist es dann möglich, erneut auf den Barcode zuzugreifen und hierbei Zugriff zu allen bestimmten oder notwendigen Metainformationen zu erlangen.

In einer weiteren vorteilhaften Ausführungsform kann es vorgesehen sein, dass im ersten Schritt kein real zu verwendender Barcode innerhalb des ersten Abschnitts des ersten Bereichs erzeugt wird. Hier ist es vorgesehen, dass zunächst ein Dummy-Barcode ohne besonderen Inhalt innerhalb des ersten Bereich bzw. des ersten Abschnitts erzeugt wird. Die Datei mit dem so bereitgestellten ersten Bereich, wobei insbesondere im zweiten Abschnitt bereits vorgegebenen Metainformationen für den zu erzeugenden Barcode hinterlegt sein können, kann dann innerhalb eines Workflows zur Druckprodukterzeugung weiter verarbeitet werden. Als erster Bereich kann hier insbesondere ein form xObject, wie oben beschrieben, verwendet werden.

Vor der Bebilderung des Substrats ist es dann vorgesehen, dass der Dummy-Barcode unter Verwendung der Metainformation des zweiten Abschnitts und / oder der Daten eines dritten Abschnitts durch einen bestimmten Barcode ersetzt wird. Hierfür können auch die oben beschriebenen dynamischen Marken verwendet werden. Dabei werden die Metadaten in Bezug auf den Text des bestimmten Barcodes entsprechend angepasst.

Auf Grundlage des so erzeugten bestimmten Barcodes wird dann ein zweiter Bereich bzw. ein zweites form xObject mit dem bestimmten Barcode erstellt, wobei in dem zweiten Abschnitt die angepassten Metainformationen hinterlegt werden und das erste form xObject innerhalb der Datei bzw. der erste Bereich wird durch den zweiten Bereich bzw. das zweite form xObject ernannt.

Auf diese Weise wurde die Datei so abgeändert, dass der bestimmte Barcode mit den dazugehörigen Metainformationen hinterlegt ist, ohne dass ein besonderer Aufwand zur Identifizierung und Codierung bzw. Decodierung des Barcodes selber notwendig gewesen wäre.

Bekommt ein Druckbetrieb von einem externen Kunden eine entsprechend Druckvorlage mit einem Barcode, so kann es möglich sein, dass der Barcode zunächst keinerlei weiteren Informationen umfasst oder aufgrund seiner Konzeption in dem vorzusehenden Druckverfahren nicht gut genug produziert werden kann. Diese so gelieferte Ursprungsdatei wird mit dem Ursprungsbarcode an den ersten Computer übermittelt wird. Dieser Ursprungsbarcode wird dann innerhalb der Ursprungsdatei durch geeignete Mittel der PDL abgedeckt oder gelöscht, wenn dieses möglich sein sollte. Auf der Grundlage dieser Ursprungsdatei wird die Datei mit dem ersten Bereich erzeugt, welcher in dem abgedeckten Bereich der Ursprungsdatei hinterlegt wird. Der erste Bereich umfasst dabei in einem ersten Abschnitt den ersten Barcode, welcher wenigstens inhaltlich dem Ursprungsbarcode entsprechen sollte. Die Metainformationen zur weiteren Bearbeitung, Verfügbarmachung innerhalb des ersten Barcodes sind dann in dem zweiten Abschnitt des ersten Bereichs hinterlegt.

Es wird weiterhin Schutz für einen Datenträger beansprucht, welcher ein Computerprogramm speichert, das zur Durchführung eines Verfahrens, wie oben beschrieben, Verwendung findet.

Die Aufgabe der Erfindung wird weiter in Vorrichtungshinsicht durch eine Vorrichtung zur Bebilderung eines Substrats mit einem Bild gelöst, wobei dieses zu erzeugende Bild wenigstens einen Bildbereich aufweist, welcher einen Barcode enthält. Die Vorrichtung soll dabei eine Bebilderungseinrichtung von bzw. für Druckplatten und / oder eine Druckmaschine und wenigstens einen ersten Computer zur Erzeugung eines Barcodes enthalten.

Der erste Computer soll wenigstens ein Eingabeorgan und ein Display aufweisen. Weiterhin soll ein Interpretationsmodul zur Interpretation einer Datei und einer Seitenbeschreibungsseite (PDL vorzugsweise PDF) umfasst werden. Dieses Interpretationsmodul ist geeignet, eine Datei zur Verwendung in dem Bebilderungsverfahren zu interpretieren und die zu bebildernden Bereiche auf dem Display graphisch zur Anzeige zu bringen.

Der erste Computer soll weiterhin wenigstens ein Eingabemodul umfassen, wobei das Eingabemodul selber Eingabeelemente zur Eingabe von Metainformationen des Barcodes aufweist. Die Eingabe von Metainformationen ist dabei über das wenigstens ein Eingabeorgan des ersten Computers möglich. Bei diesem ersten Eingabeorgan kann es sich beispielsweise um ein Keyboard, eine Maus, einen Trackball oder auch um Bereich eines Touchscreens des Displays handeln.

Erfindungsgemäß sollen das Interpretationsmodul und das Eingabemodul informationsmäßig miteinander verbunden sein. Das Interpretationsmodul soll erste Ausleseelemente umfassen, welche Informationen aus einem ersten Abschnitt eines ersten Bereichs der Datei auslesen kann, wobei das Interpretationsmodul auf Basis dieser ausgelesenen Informationen die graphische Ausgestaltung des Barcodes, d. h. seine Repräsentation, wie er auf dem Display dargestellt wird, ermitteln und das Display entsprechend ansteuern kann.

Das Interpretationsmodul soll weiter zweite Ausleseelemente umfassen, welche die Metainformationen des Barcodes aus einem zweiten Abschnitt des ersten Bereichs der Datei auslesen kann. Die Verbindung zwischen Eingabemodul, Interpretationsmodul und Display soll dabei so ausgestaltet sein, dass die Metainformationen, welche durch das Interpretationsmodul ausgelesen werden, in Eingabeelemente des Eingabemoduls übergeben und auf dem Display dargestellt werden.

Durch entsprechende Eingabemittel des ersten Computers sind die dargestellten Metainformationen änderbar.

Weiter ist wenigstens ein Barcode-Erzeugungsmodul bereitgestellt, welches auch auf Grundlage der in den Eingabeelementen eingegebenen oder geänderten Metainformationen einen zweiten Barcode erzeugen kann.

Weiter ist wenigstens ein Schreibmodul vorhanden, welches Eingaben oder Änderungen der Metainformationen in den zweiten Abschnitt einträgt. Dieses oder ein alternatives oder zusätzliches Schreibmodul soll auch in der Lage sein, entsprechende Änderungen am Barcode in graphischer Art und Weise im ersten Abschnitt des ersten Bereichs zu erzeugen.

Außerdem sind Speichermittel umfasst, auf welchen die Datei mit den geänderten ersten und / oder zweiten Abschnitten innerhalb des ersten Bereichs abgespeichert wird.

Ein Beispiel der Erfindung, auf das sie allerdings nicht beschränkt ist und aus dem sich weitere erfindungsgemäße Merkmale ergeben können, ist im Hinblick auf die Zeichnungen im Folgenden beschrieben.

Es zeigen:
- Figur 1: eine Darstellung unterschiedlicher Barcodes,
- Figur 2: eine Anzeige eines PDFs mit Metainformationen auf einem Display,
- Figur 3: eine weitere Anzeige der PDFs mit weiteren ausgewählten Metainformationen und
- Figur 4: eine Vorrichtung zur Erzeugung von Barcodes auf einem Substrat.

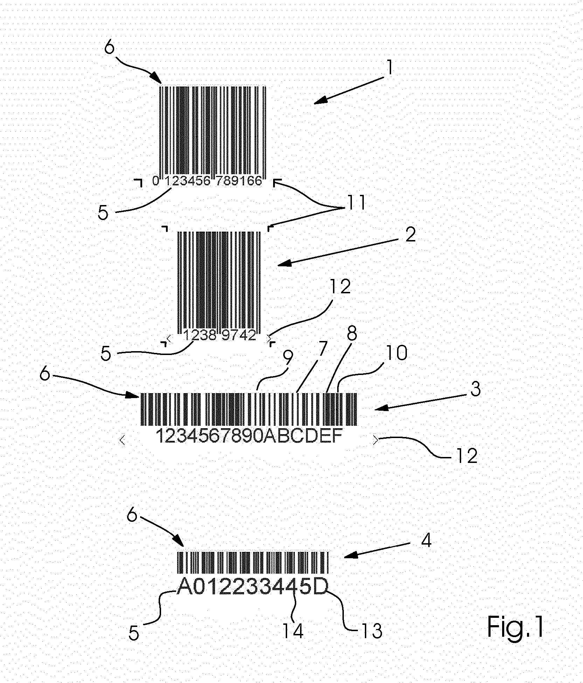

In der Figur 1 sind vier eindimensionale Barcodes 1, 2, 3 4 dargestellt, wie sie beispielsweise auf Umverpackungen verwendet werden. Alternativ zur Verwendung von eindimensionalen Barcodes 1, 2, 3, 4 sind in dem im Folgenden beschriebenen Verfahren auch zwei und zumindest auch dreidimensionale Barcodes verwendbar.

Die Barcodes 1, 2, 3, 4 bestehen jeweils aus für Menschen lesbaren Elementen 5 und aus einem Computercode 6. Der Computercode 6 ist aus unterschiedlich breiten Strichen 7 und 8 und unterschiedlich breiten Zwischenräumen 9 und 10 aufgebaut.

Die Barcodes 1, 2, 3, 4 unterscheiden sich jeweils in ihrer graphischen Darstellung beispielsweise durch die Modulhöhe, d. h. durch die Höhe der Striche 7, 8, durch die Modulbreite, d. h. durch die Ausdehnung des Computercodes 6 senkrecht zur Ausdehnungsrichtung der Striche 7, 8, durch die verwendeten Schriftarten der für Menschen lesbaren Elemente 5, durch den Inhalt der für Menschen lesbaren Elemente 5, durch die Dicke der verwendeten Striche 7, 8, durch die unterschiedlichen verwendeten Randmarkierungen 11, 12, welche alternativ oder auch gemeinsam, wie im Barcode 2 dargestellt, verwendet werden können und wobei außerdem unterschiedliche Breiten dieser Randmarkierungen 11, 12 einstellbar wären.

Die für Menschen lesbaren Elemente 5 bestehen im Wesentlichen aus Buchstaben 13 und Zahlen 14. Die Buchstaben 13 und Zahlen 14 können dann ggf. bei unlesbarem Computercode 6 von einem Menschen in einem weiteren Verfahrensschritt in einen Computer eingegeben werden für den Fall, dass der Barcode 1, 2, 3 oder 4 auf einer hier nicht dargestellten Umverpackung ausgelesen werden soll.

Im Stand der Technik sind die Barcodes 1, 2, 3, 4 jeweils ausschließlich als graphische Darstellungen, wie z. B. Tiff oder Bitmap (BMP) innerhalb einer Seitenbeschreibungssprache (PDL), wie z. B. PDF, hinterlegt. Soll nun ein Barcode 1 durch einen Barcode 2 ersetzt werden, so müsste nach dem Stand der Technik der Barcode 1 gelöscht oder überschrieben werden und der Barcode 2 auf dieselbe Art und Weise erzeugt werden, wie der Barcode 1, wobei keine Metainformationen über den Barcode 1 vorlägen.

In dem erfindungsgemäßen Verfahren, welches hier beschrieben wird, braucht der Barcode 2 dafür nicht vollständig neu aufgebaut werden, sondern es kann auf die Informationen aus dem Barcode 1 zurückgegriffen werden, die im Barcode 2 erhalten bleiben sollen. Hierfür sind in dem der Darstellung der Barcodes 1, 2, 3, 4 zugrunde liegenden PDF form xObjects hinterleg, welche zum Einen die graphische Darstellung des jeweiligen Barcodes 1, 2,3, 4 umfassen und zum Anderen die Metainformationen bereitstellen und speichern, welche den jeweiligen Barcode vollständig beschreiben.

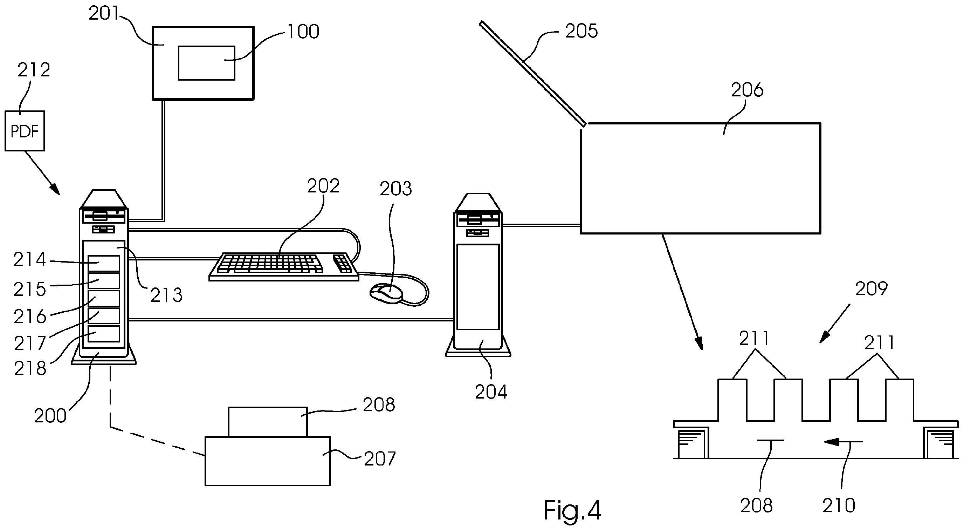

Mittels eines Interpretationsmoduls 213, welches als Computerprogrammkonstrukt auf einem Rechner abgespeichert ist, können die Informationen aus den so hinterlegten form xObjects ausgelesen und auf einem Display 201, wie es in der Figur 4 dargestellt ist, in einer Anzeige 100 zur Anzeige gebracht werden.

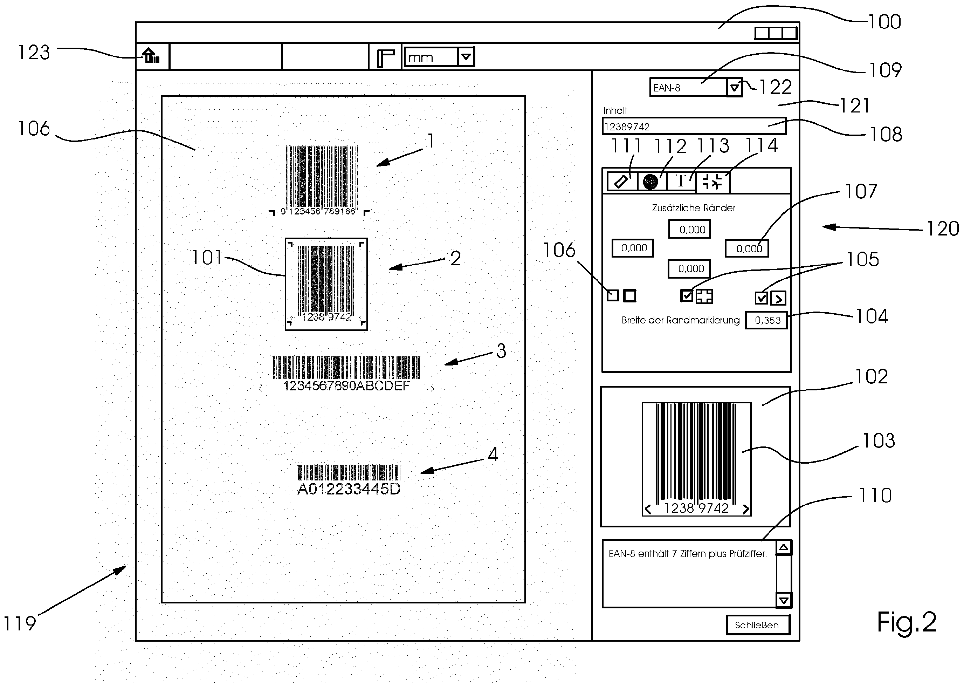

Eine entsprechende Anzeige ist in Figur 2 dargestellt.

Durch geeignete Auswahlwerkzeuge, wie z. B. einem Mauszeiger kann ein Barcode 1, 2, 3, 4, welcher hier innerhalb der Repräsentation einer PDF-Anzeige 118 auf dem Display 201 in einem ersten Anzeigefenster 119 zur Anzeige gebracht sind, mittels einer Auswahlmarkierung 101 ausgewählt werden.

Durch das Auswählen des Barcodes 2 werden die Metainformationen aus einem zweiten Abschnitt des form xObjects durch zweite Ausleseelemente 215 des Interpretationsmoduls 213 als Metainformationen des Barcodes 2 ausgelesen und in einem zweiten Anzeigefenster 120 zur Anzeige gebracht. Es ist dabei nicht notwendig, dass die Metainformationen alle gleichzeitig angezeigt werden. Sie können auch nacheinander durch Auswahl von angezeigten Reitern 111, 112, 113, 114 zur Anzeige gebracht werden. Hierbei kann es vorgesehen sein, dass die Reiter 111, 112, 113, 114 jeweils thematisch unterschiedliche Metainformationen des Barcodes 2 bereitstellen.

Innerhalb des Eingabefensters 120 befinden sich Eingabeelemente 104, 105, 106, 107, in welchen zunächst die im ausgewählten form xObject hinterlegten Daten der Metainformationen zur Anzeige gebracht werden. So wird im Eingabeelement 104 die Breite der Randmarkierungen 11, 12, wie sie im form xObject hinterlegt sind, angezeigt. Die Eingabeelemente 105 und 106 geben Auskunft über die Art der Randmarkierungen 11, 12, die jeweils für diesen Barcode ausgewählt wurden.

Die Eingabeelemente 107 geben die Werte für die zusätzlichen Ränder an, welche um den Barcode 2 herum bereitgestellt sind.

Während die Metainformationen, welche in den Eingabeelementen 104 bis 107 angezeigt sind, durch die Auswahl unterschiedlicher Reiter 111 bis 114 ausgetauscht werden können, befindet sich in einem zweiten Bereich 121 des Anzeigefensters 120 ein statisches Feld zur Anzeige bestimmter elementarer Metainformationen des ausgewählten Barcodes 2. Diese Metainformationen werden selber in entsprechenden Eingabeelementen 108 und Eingabeelementen mit Auswahlmöglichkeit 109 hinterlegt.

Während die einfachen Eingabeelemente 104 bis 108 jeweils durch Markieren oder durch Eingabe von neuen Werten verändert bzw. modifiziert oder aus- oder abgewählt werden können, besteht für Eingabeelemente mit Auswahlmöglichkeiten 109 die Möglichkeit, eine Liste von möglichen Eingabewerten in einem Scroll-down-Menü zur Verfügung zu stellen. Durch Betätigung eines Pfeils 122 kann das Scroll-down-Menü herausgefahren werden und die gewünschten Werte für dieses Eingabeelement mit Auswahlmöglichkeiten 109 ausgewählt werden. In dem hier dargestellten Fall weist das Eingabeelement mit Auswahlmöglichkeit 109 die Information über die Art des verwendeten Barcodes 2 auf.

Zusätzlich zu den angezeigten und veränderbaren Metainformationen in den Eingabeelementen 104 bis 109 werden die Informationen aus dem ersten Abschnitt des form xObjects ausgelesen und zur Anzeige in einem Anzeigefenster 102 gebracht. 111, 112, 113, 114. Es handelt sich hierbei um die graphische Darstellung 103 des Barcodes 2, wie er im ersten Abschnitt des form xObjects hinterlegt ist. Diese Darstellung ist identisch mit der Darstellung innerhalb der PDF-Anzeige 118, welche durch Interpretation des ausgelesenen PDFs erzeugt wird. Das Interpretationsmodul 213 weist hierfür erste Ausleseelemente 214 auf.

Zusätzlich zu den Metainformationen des zweiten Abschnitts und der graphischen Darstellung 118 des form xObjects des Barcodes 2 können in einem weiteren Anzeigeelement 110 grundlegende Informationen, z. B. für das im Eingabeelement mit Auswahlmöglichkeiten 109 ausgewählte Format des Barcodes, angezeigt werden.

Soll nun der Barcode 2 nur in einzelnen Bereichen modifiziert werden, so ist dieses ohne erneute Eingabe aller notwendigen Parameter auf einfache Weise möglich.

Soll z. B. nur der Inhalt, wie er im Eingabeelement 108 hinterlegt ist, geändert werden, so ist es möglich, dass ausschließlich im Eingabeelement 108 eine Änderung erfolgt. Der Barcode 2 kann dann auf Grundlage aller ausgelesenen Metainformationen, wie sie in den übrigen Eingabeelementen 104 bis 107 und 109 abgelegt sind, auf einfache Weise durch Aktivierung eines entsprechenden Startschalters 123 erzeugt werden. Hierfür weist der erste Computer 200 in Figur 4 ein entsprechendes Barcoderzeugungsmodul 216 auf. Durch diese neue Erzeugung des Barcodes 2 mittels der im form xObject hinterlegten Metainformationen unter Verwendung der modifizierten einzelnen Metainformationen wird im ersten Abschnitt des form xObjects eine geänderte graphische Darstellung 103 des Barcodes 2 erzeugt. Auf diese Weise wird mit allen ausgelesenen Metainformationen, den geänderten Metainformationen und der geänderten graphischen Darstellung 103 zunächst im Arbeitsspeicher ein neues form xObject erzeugt, welches dann vollständig das form xObject, welches im der PDF-Anzeige 118 zugrunde liegenden PDF hinterlegt ist, ersetzt. Auf diese Weise wird in folgenden Workflow-Schritten und bei der folgenden Erzeugung des Barcodes auf einem Substrat der modifizierte Barcode 2 bebildert.

Hierbei kann es beispielsweise möglich sein, dass in einem ersten Arbeitsschritt der Inhalt des Barcodes vollständig leer oder ausschließlich durch Nullen oder durch andere Dummy-Werte in einem Eingabeelement 108 hinterlegt wird.

Der Barcode weist dann zwar noch keinen zu verwendenden Inhalt auf, aber alle übrigen Merkmale, die den Barcode vollständig beschreiben, sind bereits bekannt und in einem erzeugten PDF in dem zweiten Abschnitt des form xObject hinterlegt. Solch ein PDF kann dann beispielsweise in einem Kundenbetrieb einer Druckerei erzeugt werden. Das PDF kann der Druckerei beispielsweise über einen Datenträger oder einen Upload über das Internet zur Verfügung gestellt werden. Erst kurz vor der Bebilderung eines Substrates, beispielsweise einer Druckplatte 205 oder eines Bogens 208, wie sie in der Figur 4 dargestellt sind, wird der Inhalt des Barcodes in einer weiteren Bearbeitungsstation, d. h. innerhalb eines Computers 204, durch das gleiche Programm mittels des beschriebenen Verfahrens eingesetzt. Da alle Metainformationen vollständig im form xObject erhalten bleiben, werden alle Kundenwünsche ohne weitere Nachfrage auf einfache Weise bei der Erzeugung des PDFs 2 auf dem Substrat 205, 208 berücksichtigt.

Alternativ kann es auch vorgesehen sein, dass zum Inhalt im Eingabeelement 108 oder in einem weiteren Eingabeelement dynamische Platzhalter hinterlegt werden können. Hierbei kann es sich beispielsweise um Platzhalter für die Farbe eines Farbauszugs für die Nummer einer Druckplatte oder für eine Kundennummer handeln.

Unmittelbar vor der Bebilderung einer Druckplatte 205 oder der Bebilderung eines Bogens 208, beispielsweise in einem digitalen Drucker 207, können diese dynamischem Inhalte ausgelesen und durch hinterlegte tatsächliche Werte, wie z. B. die Kundennummer, ersetzt werden. Durch das Auslesen und die Bearbeitung des Inhalts in Abhängigkeit von diesen dynamischen Inhalten wird der Inhalt 108 des Barcodes 2 erst kurz vor der Bebilderung des Substrats 205, 208 abschließend erzeugt. Auf diese Weise kann z. B. bei der Bebilderung einer Druckplatte 205 innerhalb eines Belichters 206 die Farbe des Farbauszugs der Druckplatte 205 im Inhalt 108 des Barcodes 2 codiert werden.

Die Eigenschaften dieser dynamischen Inhalte können dabei auf einem Display 201 innerhalb einer Anzeige 100, beispielsweise im Anzeigeelement 110 oder in alternativen Anzeigeelementen, zur Anzeige gebracht werden.

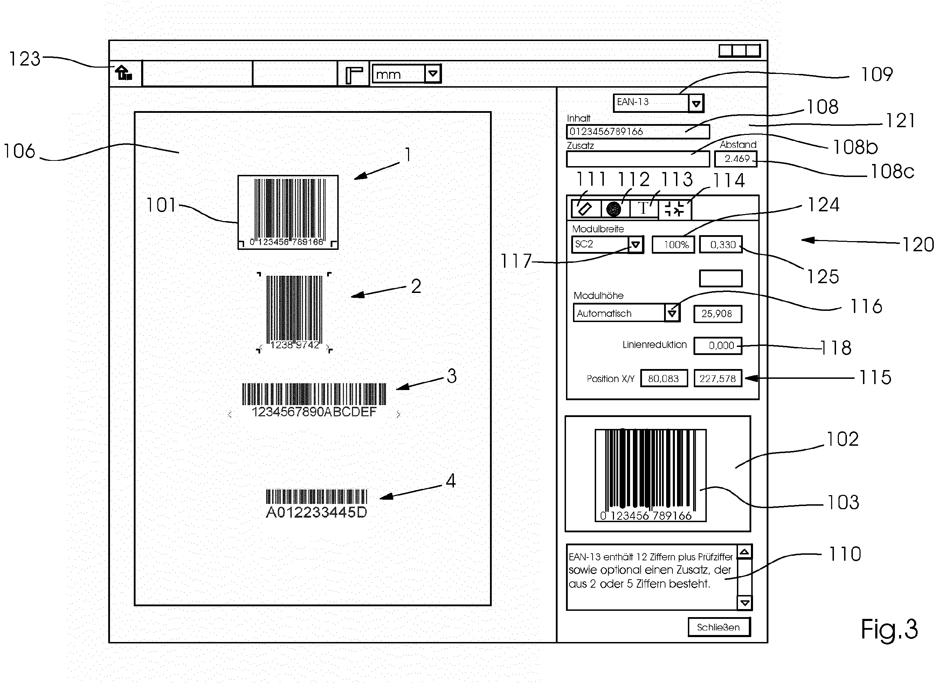

Die Figur 3 zeigt beispielhaft eine zweite Auswahl von Eingabeelementen 115, 118, 108b, 108c und Eingabeelementen mit Auswahlmöglichkeiten 116, 117.

Diese Eingabeelemente 108b, 108c und 115 bis 118 sind durch die Auswahl des Reiters 111 auswählbar.

Wie oben beschrieben werden in diese Eingabeelemente 108 bis 110 und 115 bis 118 zunächst die Metainformationen eingeschrieben, welche in einem zweiten Abschnitt des form xObject des ausgewählten Barcodes 1 abgespeichert sind. Im hier dargestellten Fall ist der Barcode 1 mittels der Auswahlmarkierung 101 ausgewählt. In Abhängigkeit vom ausgewählten Format 109 des Barcodes 1 können im zweiten Bereich 121 des Anzeigefensters 120 zusätzliche Eingabeelemente 108b und 108c vorgesehen sein.

Die Verwendung dieser Eingabeelemente 108b, 108c kann beispielsweise im Anzeigeelement 110 beschrieben sein. Hier können beispielsweise auch Eingabeelemente 108b zur Eingabe von dynamischen Inhalten vorgesehen sein.

Zur Auswahl der Modulbreite innerhalb eines Eingabeelements mit Auswahlmöglichkeit 117 können vorgegebene Werte bei der Änderung der Modulbreite in Eingabeelementen 124, 125 vorgesehen sein. Diese können dann weiter variiert werden. Gleiches gilt für die Modulhöhe in einem Eingabeelement mit Auswahlmöglichkeit 116. Die Modulhöhe kann dabei automatisch oder auch manuell eingegeben werden. Solche Zuordnungen sind generell für Eingabeelemente mit Auswahlmöglichkeit möglich.

Über die Position, welche in einem Eingabeelement 115 hinterlegt ist, kann auf einfache Weise der Barcode 1 ohne inhaltliche Änderungen innerhalb des PDFs, welches der PDF-Anzeige 118 zugrunde liegt, verschoben werden, so dass die PDF-Anzeige 118 entsprechend angepasst wird und der Barcode 1 entsprechend positioniert auf einem Substrat 205 oder 208 erzeugt wird.

In der Figur 4 ist ein entsprechender Aufbau zur Erzeugung von Barcodes 1, 2, 3, 4 auf Substraten 205, 208 dargestellt. Bei den Substraten 205, 208 handelt es sich beispielsweise um Druckplatten 205 oder Bogen 208, die innerhalb einer Druckmaschine 209 unter Verwendung einer bebilderten Druckplatte 205 oder in einem digitalen Drucker 207 bebildert werden.

Bei dem hier dargestellten Aufbau kann es sich beispielsweise um den Aufbau innerhalb einer Druckerei handeln. Die Druckerei erhält von einem ihrer Kunden ein PDF 212 in elektronischer Form. Dieses kann über einen Datenträger, wie z. B. DVD, CD, USB-Stick oder mittels eines Datenstroms, beispielsweise über das Internet, erfolgen. Dieses PDF wird dann in einem ersten Computer 200 eingelesen. Innerhalb dieses PDFs ist ein erster Barcode 1 hinterlegt, welcher in einem form xObject in einem ersten Abschnitt graphisch als graphische Darstellung 103 hinterlegt ist. Zusätzlich zur graphischen Darstellung 103 befinden sich im gleichen form xObject des PDFs 212 auch die oben beschriebenen Metainformationen, welche den Barcode 1 vollständig beschreiben.

Unter Verwendung aller Informationen des form xObjects des PDFs 212 wird der Barcode 1 innerhalb einer PDF-Anzeige 118 unter Verwendung eines Interpretationsmoduls 213 mit ersten und zweiten Ausleseelementen 214 und 215 innerhalb einer Anzeige 100 auf einem Display 201, welches mit dem Computer 200 verbunden ist, zur Anzeige gebracht. Hierbei liest das erste Ausleseelement die Daten aus einem ersten Abschnitt des form xObjects, welche die graphische Darstellung 103 des Barcodes 1 betreffen, aus und bringen diese entsprechend auf der PDF-Anzeige 118 und innerhalb des Anzeigeelements 110 der Anzeige 100 zur Anzeige. Mittels des zweiten Ausleseelements 215 werden die Metainformationen aus dem zweiten Abschnitt des form xObjects ausgelesen und in den beschriebenen Eingabeelementen 104 bis 108, 108b, 108c, 115, 118, 124, 125 und den Eingabeelementen mit Auswahlmöglichkeiten 109, 116, 117 eingetragen. Über Eingabemittel in Form eines Keyboards 202 und einer Maus 203 kann das PDF 1 mittels einer Auswahlmarkierung 101 ausgewählt werden und so mit Metainformation in den oben genannten Eingabeelementen angezeigt werden. Bei Zuhilfenahme von Maus 203 und Keyboard 202 können diese Metainformationen dann nach weiteren Vorgaben modifiziert werden. Im Anschluss an diese Modifikation wird ein neues form xObject mit einem entsprechend angepassten Barcode 2 mit einer entsprechenden graphischen Darstellung 103 erzeugt, wobei dieses form xObject das ursprüngliche form xObject im PDF 212 ersetzt. Hierbei wird noch einmal ausdrücklich darauf hingewiesen, dass die Metainformationen im zweiten Abschnitt des form xObjects nicht mittels Werkzeugen, Elementen oder als Code hinterlegt werden müssen, welche der Seitenbeschreibungssprache entsprechen, sondern in einem privaten Bereich auf proprietäre Art und Weise erzeugt werden können.

Das neu erzeugte form xObject wird dabei erzeugt, indem geänderte oder neu eingegebene Metainformationen mittels eines Schreibmoduls 217 in wenigstens den zweiten Abschnitt des form xObject eingetragen werden. Anschließend wird das mit dem neu erzeugten form xObject versehene PDF 212 auf einer Festplatte 218 als Speichermittel abgelegt. Als Speichermittel können dabei alternativ auch andere Speichermittel wie z.B. Netzwerkspeicher, USB-Speicher, Flashdrives o.Ä. verwendet werden.

Das so erzeugte abgewandelte PDF 212 dient als Grundlage zur Bebilderung eines Bogens 208. Der Bogen 208 kann dabei alternativ in einer digitalen Druckmaschine 207 oder in einer Druckmaschine 209 bebildert werden. Statt oder zusätzlich zum Bogen 208 kann auch eine Druckplatte 205 in einem Plattenbelichter 206 bebildert werden. Dies ist insbesondere dann notwendig, wenn der Bogen 208 in einer herkömmlichen Offsetdruckmaschine 209 in Farbwerken 211 bebildert werden soll. Zur Bebilderung innerhalb einer Offsetdruckmaschine 209 wird das PDF an einen weiteren Computer 204 gesendet oder übergeben, welcher mit den gleichen Eingabe- und Ausgabemöglichkeiten wie der erste Computer 200 versehen sein kann. Hier kann insbesondere erneut der Zugriff auf das geänderte PDF 212 erfolgen und sowohl der Barcode mit neuen Informationen geändert werden als auch dynamische Inhalte des Inhalts 108 des Barcodes 2 generiert bzw. ersetzt werden. Auf der Grundlage des so angepassten PDFs 212 werden dann Bitmap-Daten mittels eines RIPs erzeugt, wobei der RIP insbesondere Bestandteil des Computers 204 sein kann. Diese Bitmap-Daten werden zur punktweisen Bebilderung der Druckplatte 205 im Plattenbelichter 206 verwendet. Auf diese Weise wird bereits auf der Druckplatte 205 als Substrat der modifizierte Barcode 2 erzeugt. Die Erzeugung des Barcodes 2 kann dabei insbesondere in dem Bereich der Druckplatte 205 erfolgt, der nicht zur Bebilderung in einer Druckmaschine 209 vorgesehen ist. Hier kann z. B. mittels dynamischer Inhalte der Farbauszug der Druckplatte 205 hinterlegt sein, so dass die Verwendung der Druckplatte 205 innerhalb der Druckmaschine 209 unterstützt wird. Weiter wird die Druckplatte 105 in einem Farbwerk 211 der Druckmaschine 209 eingespannt, der Bedruckstoff 208 wird in Transportrichtung 210 durch die Druckmaschine 209 hindurch transportiert und in den einzelnen Farbwerken 211 mittels der Druckplatten 205 bebildert, so dass der modifizierte Barcode 2, beispielsweise zur Verwendung für eine Umverpackung, auf dem Bogen 208 mit den aktuellsten Informationen, welche im Computer 204 oder im Computer 200 eingegeben wurden, bebildert wird.

Eine Bebilderung findet alternativ in einer digitalen Druckmaschine oder in einem Drucker 207 statt, indem dieser Drucker 207 mittels eines Treibers des Computers 200 auf Grundlage des modifizierten PDFs 212 entsprechend angesteuert wird und so auf dem Bogen 208 der modifizierte Barcode 2 erzeugt wird.

Auf diese Weise kann der Barcode innerhalb des Workflows jederzeit mit aktuellen Informationen versorgt werden, ohne dass eine vollständige Neugenerierung des Barcodes 1, 2, 3 oder 4 unter Neueingabe aller Metainformationen notwendig wäre.

### Bezugszeichenliste

- 1: Barcode
- 2: Barcode
- 3: Barcode
- 4: Barcode
- 5: Für Menschen lesbare Elemente
- 6: Computercode
- 7: Striche
- 8: Striche
- 9: Zwischenräume
- 10: Zwischenräume
- 11: Randmarkierungen
- 12: Randmarkierungen
- 13: Buchstaben
- 14: Zahlen

- 100: Anzeige
- 101: Auswahlmarkierung
- 102: Anzeigefenster
- 103: graphische Darstellung
- 104: Eingabeelemente
- 105: Eingabeelemente
- 106: PDF-Anzeige
- 107: Eingabeelemente
- 108: Eingabeelemente
- 108b: Eingabeelemente
- 108c: Eingabeelemente
- 109: Eingabeelemente mit Auswahlmöglichkeiten
- 110: Anzeigeelement
- 111: Reiter (Auswahlelemente)
- 112: Reiter (Auswahlelemente)
- 113: Reiter (Auswahlelemente)
- 114: Reiter (Auswahlelemente)
- 115: Eingabeelemente
- 116: Eingabeelemente mit Auswahlmöglichkeiten
- 117: Eingabeelemente mit Auswahlmöglichkeiten
- 118: Eingabeelemente
- 119: Anzeigefenster
- 120: Anzeigefenster
- 121: Zweiter Bereich
- 122: Pfeil
- 123: Startschalter
- 124: Eingabeelemente
- 125: Eingabeelemente

- 200: Computer
- 201: Display
- 202: Keyboard
- 203: Maus
- 204: Computer
- 205: Druckplatte
- 206: Belichter
- 207: Drucker
- 208: Bogen
- 209: Druckmaschine
- 210: Transportrichtung
- 211: Farbwerke
- 212: PDF
- 213: Interpretationsmodul
- 214: erstes Ausleseelement
- 215: zweites Ausleseelement
- 216: Barcodeerzeugungsmodul
- 217: Schreibmodul
- 218: Festplatte

## Patentansprüche

1. Verfahren zur Bebilderung eines Substrates (205, 208), wobei ein Bild auf der Oberfläche des Substrats (205, 208) erzeugt wird und die Bebilderung wenigstens einen Bildbereich erzeugt, welcher einen Barcode (1, 2, 3, 4) enthält,
dass mit einem ersten Computer (200) eine Datei erzeugt wird, die eine Druckvorlage zur Bebilderung des Substrates (205, 208) umfasst,
die Datei in einer Seitenbeschreibungssprache, PDL vorzugsweise PDF erzeugt wird,
innerhalb eines ersten Bereichs der Datei ein erster Abschnitt angelegt wird, der einen ersten Barcode (1, 2, 3, 4) beschreibt, wobei der Bereich durch die Verwendung von Identifizierungselemente der PDL eindeutig identifizierbar wird,
die Datei nach ihrer Erzeugung auf einem Speichermedium gespeichert wird oder als Datenstrom an einen zweiten Computer (204) gesendet wird,
die Datei von dem ersten oder dem zweiten Computer (200, 204) erneut geöffnet wird, der erste Bereich der Datei durch die Identifizierungselemente identifiziert wird, **dadurch gekennzeichnet, dass**
auf den ersten Barcode (1, 2, 3, 4) zugegriffen wird und Änderungen an Informationsinhalten des ersten Barcodes (1, 2, 3, 4) vorgenommen werden,
unter Verwendung der geänderten Informationsinhalte ein inhaltlich geänderter erster Bereich in der Datei erzeugt wird, und
auf Grundlage dieser Datei das Substrat (205, 208) in einer Bebilderungseinrichtung (206, 207, 209) bebildert wird, wobei der Barcode (1, 2, 3, 4) unter Berücksichtigung der Informationsinhaltsänderungen in dem wenigstens einen Bildbereich physisch erzeugt wird.

2. Verfahren nach Anspruch 1,
**dadurch gekennzeichnet,**
**dass** der Barcode (1, 2, 3, 4) in einer graphischen Darstellung (103) im ersten Abschnitt des ersten Bereichs abgelegt wird.

3. Verfahren nach Anspruch 1,
**dadurch gekennzeichnet,**
**dass** in dem ersten Bereich der Datei wenigstens ein zweiter Abschnitt angelegt wird, und Metainformationen zur Beschreibung des Barcodes (1, 2, 3, 4) in diesem zweiten Abschnitt abgelegt werden.

4. Verfahren nach Anspruch 3,
**dadurch gekennzeichnet,**
**dass** in einem ersten Schritt die Datei mit einem ersten Bereich erzeugt wird,
in dem ersten Bereich ein erster Abschnitt erzeugt wird, welcher einen ersten Barcode (1, 2, 3, 4) codiert,
in dem ersten Bereich ein zweiter Abschnitt erzeugt wird, welcher Metadaten des ersten Barcodes (1, 2, 3, 4) codiert,
die Datei in einem ersten oder zweiten Computer (200, 204) erneut geöffnet wird, der erste Bereich decodiert wird,
auf die Metadaten des zweiten Abschnitts zugegriffen und diese geändert oder ersetzt werden sodass zweite Metadaten erzeugt werden,
auf Grundlage der zweiten Metadaten ein zweiter Barcode (1, 2, 3, 4) erzeugt wird, ein zweiter Bereich mit einem ersten und einem zweiten Abschnitt erzeugt wird, wobei der erste Abschnitt des zweiten Bereichs den zweiten Barcode (1, 2, 3, 4) und der zweite Abschnitt des zweiten Bereichs die zweiten Metadaten umfasst,
der erste Bereich der Datei durch den zweiten Bereich ersetzt wird und ausgehend von dieser geänderten Datei ein Bild auf einem Substrat (205, 208) mit dem zweiten Barcode bebildert wird.

5. Verfahren nach Anspruch 4,
**dadurch gekennzeichnet,**
**dass** ein dritter Abschnitt innerhalb des ersten Bereichs erzeugt wird,
in dem dritten Abschnitt Daten bezüglich des Inhalts des zweiten Barcodes abgelegt werden, vorzugsweise diese Daten in Form von Platzhaltern hinterlegt werden, die Platzhalter zur Erzeugung des zweiten Barcodes (1, 2, 3, 4) auf dem Substrat durch einen vorgegeben Wert ersetzt
wird, und dass auf Grundlage dieser Daten des zweiten und dritten Abschnitts der zweite Barcode (1, 2, 3, 4) im ersten Abschnitt oder auf dem Substrat erzeugt wird.

6. Verfahren nach Anspruch 1,
**dadurch gekennzeichnet,**
**dass** der erste Bereich in Form eines ersten form xObjects einer PDF-Datei erzeugt wird, dieses form xObject den Barcode (1, 2, 3, 4) in Form von graphischen Elementen (103) in einem ersten Abschnitt umfasst und wenigstens eine Metainformationen wenigstens aus der Menge Typ, Position, Layout spezifische Positionen, relative Positionsbestimmung, Modulhöhe, Modulbreite, Linienreduktion, Hintergrundfarbe, Vordergrundfarbe, Farbregel, Rahmen, Abstandmarkendefinition, Zeichensatz, Zeichengröße und Textinhalt des Barcodes in dem zweiten Abschnitt enthalten sind.

7. Verfahren nach Anspruch 6,
**dadurch gekennzeichnet,**
**dass** in einem ersten Schritt das form xObject erzeugt wird, wobei der Barcode (1, 2, 3, 4) in Bezug auf seinen Textinhalt ohne tatsächlichen Inhalt in der Art eines Dummy-Barcodes erzeugt wird,
die Datei mit dem form xObject innerhalb eines Workflows zur Druckprodukterzeugung weiterverarbeitet wird und
vor der Bebilderung des Substrates der Dummy-Barcode unter Verwendung der Metainformationen des zweiten Abschnitts und/oder der Daten eines dritten Abschnitts durch einen bestimmten Barcode (1, 2, 3, 4) ersetzt wird, wobei die Metadaten in Bezug auf den Text des bestimmten Barcodes entsprechend angepasst werden,
ein zweites FormX-Objekt mit dem ausgewählten Barcode (1, 2, 3, 4) und den angepassten Metainformationen erzeugt wird und das zweite form xObject das erste form xObject ersetzt.

8. Verfahren nach Anspruch 1,
**dadurch gekennzeichnet,**
**dass** eine Ursprungsdatei mit einem Ursprungs-Barcode (1, 2, 3, 4) an den ersten Computer (200) übermittelt wird, der Ursprungs-Barcode (1, 2, 3, 4) innerhalb der Ursprungsdatei abgedeckt oder gelöscht wird und auf Grundlage der Ursprungsdatei die Datei mit dem ersten Bereich, welcher in einem ersten Abschnitt einen ersten Barcode (1, 2, 3, 4) umfasst erzeugt wird.

9. Datenträger, auf welchem ein Computerprogramm zur Durchführung eines Verfahrens nach einem der vorigen Ansprüche gespeichert ist.

10. Vorrichtung zur Bebilderung eines Substrates mit einem Bild, wobei das Bild wenigstens einen Bildbereich aufweist, welcher einen Barcode (1, 2, 3, 4) enthält, umfassend eine Bebilderungseinrichtung (206) von Druckplatten (205) und/oder eine Druckmaschine (209) und wenigstens einen ersten Computer (200) zur Erzeugung eines Barcodes (1, 2, 3, 4) zur Durchführung eines Verfahrens nach wenigstens einem der Ansprüche 1 bis 8,
**dadurch gekennzeichnet,**
**dass** der erste Computer (200) wenigstens ein Eingabeorgan (202, 203) und ein Display (201) aufweist,
der erste Computer (200) ein Interpretationsmodul (213) zur Interpretation einer Datei (214) in einer Seitenbeschreibungsseite (PDL) umfasst,
das Interpretationsmodul (213) die Datei interpretieren und auf dem Display (201) graphisch zur Anzeige bringen kann,
der erste Computer (200) wenigstens ein Eingabemodul (120, 119, 121, 110) umfasst, das Eingabemodul (110, 119, 120, 121) Eingabeelemente (104, 105, 107, 108, 108b, 108c, 109, 115, 118, 116, 117, 124, 125) zur Eingabe von Metainformationen des Barcodes (1, 2, 3, 4) aufweist,
das Interpretationsmodul (213) und das Eingabemodul (110, 119, 120, 121) informationsmäßig miteinander verbunden sind,
das Interpretationsmodul (213) erste Ausleseelemente (214) umfasst, welche Informationen aus einem ersten Abschnitt eines ersten Bereichs der Datei auslesen, wobei das Interpretationsmodul (213) auf Basis dieser ausgelesenen Informationen aus dem ersten Abschnitt die Repräsentation des Barcodes (1, 2, 3, 4), wie er auf dem Display (201) dargestellt wird ermittelt und das Display (201) entsprechend ansteuert, das Interpretationsmodul (213) zweite Ausleseelemente (215) umfasst, welche Metainformationen des Barcodes (1, 2, 3, 4) aus einem zweiten Abschnitt des ersten Bereichs der Datei auslesen,
das Interpretationsmodul (213) so mit dem Eingabemodul (110, 119, 120, 121) verbunden ist, dass diese Metainformationen in Eingabeelementen (104, 105, 107, 108, 108b, 108c, 109, 115, 118, 116, 117, 124, 125) des Eingabemoduls (110, 119, 120, 121) auf dem Display (201) dargestellt werden,
Eingabemittel des ersten Computers (200) bereitgestellt sind, welche Eingaben oder Änderungen von Informationsinhalten der angezeigten Metainformationen innerhalb der Eingabeelemente (104, 105, 107, 108, 108b, 108c, 109, 115, 118, 116, 117, 124, 125) des Eingabemoduls (110, 119, 120, 121) ermöglichen,
wenigstens ein Barcodeerzeugungsmodul (216) bereitgestellt ist, welches auf Grundlage der in den Eingabeelementen (104, 105, 107, 108, 108b, 108c, 109, 115, 118, 116, 117, 124, 125) eingegebenen oder geänderten Informationsinhalte der Metainformationen einen zweiten Barcode (1, 2, 3, 4) erzeugen kann,
weiter wenigstens ein Schreibmodul (218) vorhanden ist, welches Eingaben oder Änderungen von angezeigten Informationsinhalten der Metainformationen in den zweiten Abschnitt des ersten Bereichs und/oder den zweiten Barcode (1, 2, 3, 4) in den ersten Abschnitt des ersten Bereichs einträgt, und
Speichermittel (218) umfasst sind, auf welchen eine Datei mit entsprechend geänderten ersten und/oder zweiten Abschnitten im ersten Bereich abgespeichert wird.

## Claims

1. Method of imaging a substrate (205, 208) wherein an image is generated on the surface of the substrate (205, 208) and the imaging operation generates at least one image area containing a bar code (1, 2, 3, 4),
wherein
a first computer (200) generates a file comprising artwork for imaging the substrate (205, 208),
the file is generated in a page description language PDL, preferably PDF,
a first section is created within a first region of the file, said first section describing a first bar code (1, 2, 3, 4), said region becoming unequivocally identifiable due to the use of identification elements of the PDL,
having been generated, the file is saved on a storage medium or sent to a second computer (204) as a data stream,
the file is reopened by the first or second computer (200, 204),
the first region of the file is identified by means of the identification elements, **characterized**
**in that** the first bar code (1, 2, 3, 4) is accessed and modifications are made to the information content of the first bar code (1, 2, 3, 4),
a first region modified in terms of content is generated in the file using the modified information content,
and, based on this file, the substrate (205, 208) is imaged in an imaging device (206, 207, 209) and the bar code (1, 2, 3, 4) is physically generated in the at least one image region, factoring in the modifications to the information content.

2. Method according to claim 1,
**characterized**
**in that** the bar code (1, 2, 3, 4) is stored in a graphic representation (103) in the first section of the first region.

3. Method according to claim 1,
**characterized**
**in that** at least a second section is created in the first region of the file and in that meta-information for describing the bar code (1, 2, 3, 4) is stored in this second region.

4. Method according to claim 3,
**characterized**
**in that** in a first step, the file with a first region is generated,
a first section encoding a first bar code (1, 2, 3, 4) is generated in the first region, a second section encoding meta-data of the first bar code (1, 2, 3, 4) is generated in said first region,
the file is reopened in a first or second computer (200, 204),
the first section is decoded,
the meta data of the second section is accessed and modified or replaced to generate second meta-data,
a second bar code (1, 2, 3, 4) is generated on the basis of the second meta-data,
a second region with a first section and a second section is generated,
said first section of said second region comprising the second bar code (1, 2, 3, 4) and
said second section of said second region comprising the second meta-data,
the first region of the file is replaced by the second region and, based on this modified file, an image on a substrate (205, 208) is imaged with the second bar code.

5. Method according to claim 4,
**characterized**
**in that** a third section is generated within the first region,
data pertaining to the content of the second bar code is stored in the third section, these data are preferably stored in the form of wildcards,
to generate the second bar code (1, 2, 3, 4) on the substrate, the wildcards are replaced by a specified value, and, on the basis of the data of the second and third sections, the second bar code (1, 2, 3, 4) is generated in the first section or on the substrate.

6. Method according to claim 1,
**characterized**
**in that** the first region is generated in the form of a first Form XObject of a PDF file, said Form XObject comprising the bar code (1, 2, 3, 4) in the form of graphic elements (103) in a first section, and in that the second section contains at least one piece of meta-information at least from the set including type, position, layout-specific positions, relative position determination, module height, module width, line reduction, background colour, foreground colour, colour rule, frame, spacer mark definition, font, font size, and text content of the bar code.

7. Method according to claim 6,
**characterized**
**in that** in a first step, the Form XObject is generated, the bar code (1, 2, 3, 4) being generated without actual content in terms of its text content in the manner of a dummy bar code,
the file with the Form XObject is further processed in the course of a work flow for creating a printed product, and
**in that** before the substrate is imaged, the dummy bar code is replaced by a specific bar code (1, 2, 3, 4) using the meta-information of the second section and/or the data of a third section, with said meta-data being adapted in a corresponding way in terms of the text of the specific bar code, and
**in that** a second Form XObject with the selected bar code (1, 2, 3, 4) and the adapted meta-information is generated and the second Form XObject replaces the first Form XObj ect.

8. Method according to claim 1,
**characterized**
**in that** an original file with an original bar code (1, 2, 3, 4) is transmitted to the first computer (200), the original bar code (1, 2, 3, 4) within the original file is covered or deleted and, on the basis of the original file, the file with the first region comprising a first bar code (1, 2, 3, 4) in a first section is generated.

9. Data carrier on which a computer programme for implementing a method according to any one of the preceding claims is stored.

10. Device for imaging a substrate with an image, said image including at least one image region containing a bar code (1, 2, 3, 4), the device comprising an imaging device (206) for imaging printing plates (205) and/or a printing machine (209) and at least one first computer (200) for generating a bar code (1, 2, 3, 4) to implement a method in accordance with at least one of claims 1 to 8,
**characterized**
**in that** the first computer (200) includes at least one input device (202, 203) and a display (201),
the first computer (200) comprises an interpretation module (213) for interpreting a file (214) in a page description language (PDL),
the interpretation module (213) is capable of interpreting the file and of graphically displaying it on the display (201),
the first computer (200) comprises at least one input module (120, 119, 121, 110),
the input module (110, 119, 120, 121) includes input elements (104, 105, 107, 108, 108b, 108c, 109, 115, 118, 116, 117, 124, 125) for inputting meta-information on the bar code (1, 2, 3, 4),
the interpretation module (213) and the input module (110, 119, 120, 121) are informationally interconnected,
the interpretation module (213) comprises first read-out elements (214) which read out information from a first section of a first region of the file and, on the basis of said information read out from the first section, determines the representation of the bar code (1, 2, 3, 4) as it is represented on the display (201) and actuates the display (201) accordingly,
the interpretation module (213) comprises second read-out elements (215) which read out meta-information of the bar code (1, 2, 3, 4) from a second section of the first region of the file,
the interpretation module (213) is connected to the input module (110, 119, 120, 121) in such a way that the meta-information is displayed in input elements (104, 105, 107, 108, 108b, 108c, 109, 115, 118, 116, 117, 124, 125) of the input module (110, 119, 120, 121) on the display (201),
input means of the first computer (200) are provided which make it possible to input or modify information content of the displayed meta-information within the input elements (104, 105, 107, 108, 108b, 108c, 109, 115, 118, 116, 117, 124, 125) of the input module (110, 119, 120, 121),
at least one bar code generation module (216) is provided, which, on the basis of the information content of the meta-information input or modified in the input elements (104, 105, 107, 108, 108b, 108c, 109, 115, 118, 116, 117, 124, 125), is capable of generating a second bar code (1, 2, 3, 4),
furthermore at least one writing module (218) is provided, which enters inputs or modifications of displayed information content of the meta-information into the second section of the first region and/or the second bar code (1, 2, 3, 4) into the first section of the first region, and
storage means (218) are provided on which a file with correspondingly modified first and/or second sections in the first region are stored.

## Revendications

1. Procédé de gravure d'un support (205, 208), pour lequel une image est produite sur la surface du support (205, 208) et la gravure génère au moins une zone d'image qui contient un code-barres (1, 2, 3, 4),
un fichier comprenant un modèle à imprimer pour la gravure du support (205, 208) est généré avec un premier ordinateur (200), le fichier étant généré dans un langage de description de page (PDL), de préférence PDF,
à l'intérieur d'une première zone du fichier, il est créé une première section décrivant un premier code-barres (1, 2, 3, 4), la zone étant identifiable de manière unique par l'utilisation d'éléments d'identification du langage PDL, le fichier est mémorisé après sa création sur un support de stockage ou est envoyé sous forme de flux de données à un deuxième ordinateur (204), le fichier est rouvert par le premier ou le deuxième ordinateur (200, 204), la première zone du fichier est identifiée par les éléments d'identification,
**caractérisé en ce**
**que** l'on accède au premier code-barres (1, 2, 3, 4) et que des modifications sont apportées à des contenus d'informations du premier code-barres (1, 2, 3, 4), qu'en utilisant les contenus d'informations modifiés, une première zone au contenu modifié est générée dans le fichier, et que sur la base de ce fichier, le support (205, 208) est gravé dans un dispositif de gravure (206, 207, 209), le code-barres (1, 2, 3, 4) étant physiquement généré dans la zone d'image au moins, en tenant compte des modifications des contenus d'informations.

2. Procédé selon la revendication 1,
**caractérisé en ce**
**que** le code-barres (1, 2, 3, 4) est enregistré dans une représentation graphique (103) dans la première section de la première zone.

3. Procédé selon la revendication 1,
**caractérisé en ce**
**qu'**au moins une deuxième section est créée dans la première zone du fichier, et que des méta-informations pour la description du code-barres (1, 2, 3, 4) sont enregistrées dans cette deuxième section.

4. Procédé selon la revendication 3,
**caractérisé en ce**
**que**, dans une première étape, le fichier est créé avec une première zone, dans la première zone, il y a création d'une première section, qui code un premier code-barres (1, 2, 3, 4),
dans la première zone, il y a création d'une deuxième section, qui code les métadonnées du premier code-barres (1, 2, 3, 4),
le fichier est rouvert dans un premier ou un deuxième ordinateur (200, 204), la première zone est décodée,
il y a accès aux métadonnées de la deuxième section et celles-ci sont modifiées ou remplacées de sorte que de deuxièmes métadonnées sont créées,
il y a génération d'un deuxième code-barres (1, 2, 3, 4) sur la base des deuxièmes métadonnées, il y a génération d'une deuxième zone comprenant une première et une deuxième section, la première section de la deuxième zone comprenant le deuxième code-barres (1, 2, 3, 4) et la deuxième section de la deuxième zone comprenant les deuxièmes métadonnées,
il est procédé au remplacement de la première zone du fichier par la deuxième zone et, à partir de ce fichier modifié, il y a gravure sur un support (205, 208) d'une image avec le deuxième code-barres.

5. Procédé selon la revendication 4,
**caractérisé en ce**
**qu'**une troisième section est générée à l'intérieur de la première zone, que dans la troisième section des données relatives au contenu du deuxième code-barres sont enregistrées, ces données étant de préférence enregistrées sous la forme de caractères de substitution, que les caractères de substitution pour la génération du deuxième code-barres (1, 2, 3, 4) sur le substrat sont remplacés par une valeur prédéfinie, et que sur la base de ces données de la deuxième et de la troisième section, le deuxième code-barres (1, 2, 3, 4) est généré dans la première section ou sur le support.

6. Procédé selon la revendication 1,
**caractérisé en ce**
**que** la première zone est générée sous forme d'un premier form xObject d'un fichier PDF, ce form xObject comprend le code-barres (1, 2, 3, 4) sous forme d'éléments graphiques (103) dans une première section et au moins une méta-information constituée d'au moins l'ensemble « type, position, positions spécifiques de mise en page, détermination de position relative, hauteur de module, largeur de module, réduction de ligne, couleur d'arrière-plan, couleur de premier plan, règle de couleur, cadre, définition de repère d'espacement, police de caractères, taille de caractères et contenu de texte du code-barres » est contenue dans la deuxième section.

7. Procédé selon la revendication 6,
**caractérisé en ce**
**que**, dans une première étape, il y a génération d'un form xObject, avec génération du code-barres (1, 2, 3, 4) à la manière d'un code-barres factice en référence à son contenu textuel sans contenu réel, le fichier avec le form xObject est traité ultérieurement dans le cadre d'un flux de travail pour la génération de produits d'impression et qu'avant la gravure du support, le code-barres factice est remplacé par un code-barres défini (1, 2, 3, 4) en utilisant les méta-informations de la deuxième section et/ou les données d'une troisième section, les métadonnées étant adaptées en conséquence en référence au texte du code-barres défini, un deuxième form xObject étant créé avec le code-barres sélectionné (1, 2, 3, 4) et les méta-informations adaptées, et le deuxième form xObject remplaçant le premier form xObject.

8. Procédé selon la revendication 1,
**caractérisé en ce**
**qu'**un fichier d'origine ayant un code-barres d'origine (1, 2, 3, 4) est transmis au premier ordinateur (200), le code-barres d'origine (1, 2, 3, 4) est masqué ou supprimé dans le fichier d'origine, et sur la base du fichier d'origine, le fichier est généré avec la première zone comprenant dans une première section un premier code-barres (1, 2, 3, 4).

9. Support de données sur lequel est enregistré un programme informatique pour l'exécution d'un procédé selon l'une des revendications précédentes.

10. Dispositif de gravure d'un support avec une image, l'image présentant au moins une zone d'image qui renferme un code-barres (1, 2, 3, 4), comprenant un dispositif de gravure (206) de plaques d'impression (205) et/ou une machine à imprimer (209) et au moins un premier ordinateur (200) pour générer un code-barres (1, 2, 3, 4) afin d'exécuter un procédé conformément à l'une au moins des revendications 1 à 8, **caractérisé en ce**
**que** le premier ordinateur (200) comporte au moins un organe de saisie (202, 203) et un écran d'affichage (201),
le premier ordinateur (200) comprend un module d'interprétation (213) pour l'interprétation d'un fichier (214) dans une page de description de page (PDL),
le module d'interprétation (213) peut interpréter le fichier et l'afficher graphiquement sur l'écran (201),
le premier ordinateur (200) comprend au moins un module d'entrée (120, 119, 121, 110),
le module d'entrée (110, 119, 120, 121) présente des éléments d'entrée (104, 105, 107, 108, 108b, 108c, 109, 115, 118, 116, 117, 124, 125) pour l'entrée de méta-informations du code-barres (1, 2, 3, 4),
le module d'interprétation (213) et le module d'entrée (110, 119, 120, 121) sont reliés entre eux en termes d'informations,
le module d'interprétation (213) comprend des premiers éléments de lecture (214) qui déclenchent des informations provenant d'une première section d'une première zone du fichier, le module d'interprétation (213) déterminant, sur la base de ces informations lues dans la première section, la représentation du code-barres (1, 2, 3, 4), tel qu'il est représenté à l'écran (201) et pilote l'écran (201) en conséquence,
le module d'interprétation (213) comprend des deuxièmes éléments de lecture (215) qui déclenchent des méta-informations du code-barres (1, 2, 3, 4) à partir d'une deuxième section de la première zone du fichier,
le module d'interprétation (213) est relié au module d'entrée (110, 119, 120, 121) de sorte que ces méta-informations soient représentées dans des éléments d'entrée (104, 105, 107, 108, 108b, 108c, 109, 115, 118, 116, 117, 124, 125) du module d'entrée (110, 119, 120, 121) sur l'écran (201),
des moyens de saisie sont mis à disposition par le premier ordinateur (200), permettant des entrées ou des modifications de contenus d'informations des méta-informations affichées à l'intérieur des éléments d'entrée (104, 105, 107, 108, 108b, 108c, 109, 115, 118, 116, 117, 124, 125) du module d'entrée (110, 119, 120, 121),
au moins un module de génération de code-barres (216) est mis à disposition, qui, sur la base des contenus d'informations des méta-informations saisis ou modifiés dans les éléments d'entrée (104, 105, 107, 108, 108b, 108c, 109, 115, 118, 116, 117, 124, 125) peut générer un deuxième code-barres (1, 2, 3, 4),
il existe en outre au moins un module d'écriture (218), qui inscrit des entrées ou des modifications de contenus d'informations affichés des méta-informations dans la deuxième section de la première zone et/ou le deuxième code- barres (1, 2, 3, 4) dans la première section de la première zone, et
des moyens de mémorisation (218) sont prévus pour mémoriser un fichier avec des première et/ou deuxième sections modifiées en conséquence dans la première zone.
